# EUROPEAN PATENT APPLICATION

(11) **EP 4 718 614 A1**
(43) Date of publication of application: **01.04.2026**
(21) Application number: 24934265.0
(22) Date of filing: 04.12.2024
(51) Int. Cl.: H01M 50/383, H01M 50/262, H01M 50/367, H01M 50/249

(54) **BATTERY PACK AND VEHICLE INCLUDING SAME**

(30) Priority: 05.04.2024 KR 20240046650
(71) Applicant: LG Energy Solution, Ltd., Seoul 07335 (KR)
(72) Inventor: LEE, Sang-Joon, Daejeon 34122 (KR); RO, Yong-Hwan, Daejeon 34122 (KR); MUN, Jeong-O, Daejeon 34122 (KR); PARK, Shin-Young, Daejeon 34122 (KR); HWANG, Tae-Won, Daejeon 34122 (KR)
(74) Representative: Plasseraud IP
(86) International application number: PCT/KR2024/019705
(87) International publication number: WO 2025/211531

(57) **Abstract**

Disclosed is a battery pack and a vehicle including the same. The battery pack includes a plurality of battery modules in which a plurality of battery cells are stacked; a pack case in which the plurality of battery modules are accommodated; and a fastening member configured to fasten the pack case, wherein at least a portion of the fastening member is directly fastened to the pack case and at least a portion thereof melts or burns when temperature rises.

## Description

### TECHNICAL FIELD

This application is based on and claims priority from Korean Patent Application No. 10-2024-0046650, filed on April 5, 2024, with the Korean Intellectual Property Office, the disclosure of which is incorporated herein in its entirety by reference.

The present disclosure relates to a battery pack and a vehicle including the same, and more specifically, to a battery pack capable of evenly dispersing heat and smoothly discharging gas when a thermal event occurs, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module that includes a module case capable of protecting battery cells and a plurality of battery cells stacked and inserted into the module case, and a battery pack that includes a plurality of battery modules.

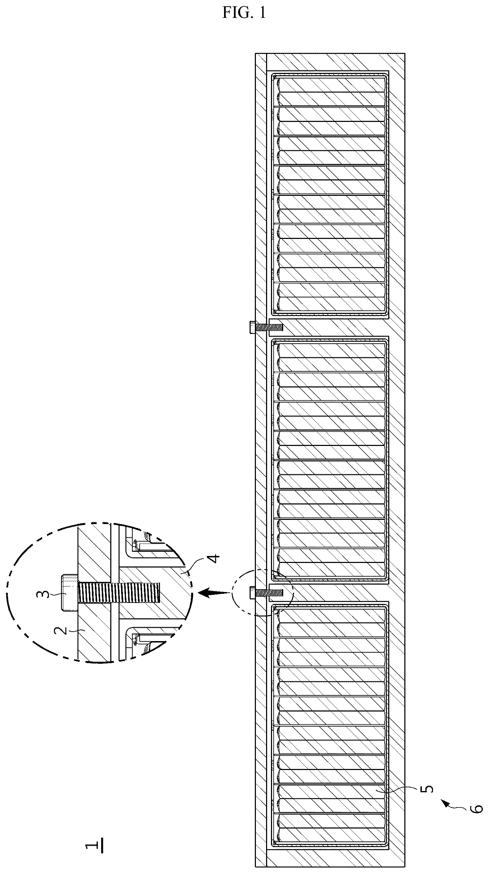

FIG. 1 is a cross-sectional view showing a conventional battery pack.

Referring to FIG. 1, in the conventional battery pack 1, the upper frame 2 is fixed to the barrier frame 4 by the bolt 3. That is, in the conventional battery pack 1, since the upper frame 2 is firmly fixed by the bolt 3, when a flame is generated, no free space or buffer space is formed through which heat or gas caused by the flame can move.

In this state, if a flame occurs in the battery cell 5, the heat caused by the flame is blocked by the upper frame 2 not to spread, but is concentrated within the battery module 6 where the flame occurs. In addition, as the gas generated within the battery module 6 is not discharged, the internal pressure increases and the possibility of explosion of the battery module 6 or the battery pack 1 increases.

At this time, if explosion occurs in the battery module 6 in which a flame is generated, flame may be propagated to another battery module 6 to cause a thermal runaway phenomenon, and if the flame leaks to the outside due to the thermal runaway phenomenon, there is a problem that the driver of the electric vehicle may be burned or put in a dangerous situation.

Alternatively, there is a problem in that the battery module 6 or the battery pack 1 is damaged or burned down by a chain reaction of flames caused by flame propagation, so it may be impossible to secure the stability of the battery module 6 or the battery pack 1.

### DISCLOSURE

### Technical Problem

The present disclosure is designed to solve the problems of the related art, and therefore the present disclosure is directed to providing a battery pack, which may prevent heat concentration by evenly dispersing heat caused by a flame inside the battery pack when a flame is generated from a single battery cell, thereby achieving uniform thermal distribution, and a vehicle including the same.

In addition, the present disclosure is directed to providing a battery pack in which venting is facilitated to easily discharge gas, and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery modules in which a plurality of battery cells are stacked; a pack case in which the plurality of battery modules are accommodated; and a fastening member configured to fasten the pack case, wherein at least a portion of the fastening member is directly fastened to the pack case and at least a portion thereof melts or burns when temperature rises.

In an embodiment, the fastening member may include a bolt, and the bolt may include a head portion; a body portion coupled to the head portion, having an insert groove formed therein, and screwed to the pack case; and a melting portion made of a meltable or burning material and inserted into the insert groove of the body portion.

In an embodiment, the insert groove may be formed in the body portion at a side opposite to the head portion.

In an embodiment, the melting portion may include a first portion in close contact with one side of the insert groove; and a second portion extending symmetrically with the first portion and in close contact with the other side of the insert groove.

In an embodiment, the melting portion may further include a third portion extending from a center of the first portion and the second portion in a direction different from the first portion and the second portion to come into close contact with the insert groove; and a fourth portion extending symmetrically with the third portion to come into close contact with the insert groove.

In an embodiment, the melting portion may have a cross-section formed in a cross shape.

In an embodiment, the melting portion may include a first portion in close contact with the insert groove; a second portion extending from the first portion at a preset angle to come into contact with the insert groove; and a third portion spaced apart from the second portion and extending from the first portion at a preset angle to come into close contact with the insert groove.

In an embodiment, the melting portion may be made of plastic.

In an embodiment, the pack case may include an upper frame; and a barrier frame fastened to the upper frame by the fastening member, and the melting portion may be located inside the barrier frame.

In an embodiment, the barrier frame may have a thread formed thereon, the fastening member may include a nut coupled to the upper frame, and the bolt may be fastened to the nut and the barrier frame.

In an embodiment, the nut may be coupled to the upper frame by welding.

In an embodiment, the nut may be separated from the barrier frame.

In an embodiment, when a flame occurs in the battery cell and the melting portion melts, the bolt may be separated from the barrier frame to deform the upper frame upward, and a buffer space may be formed between the upper frame and the battery module.

In an embodiment, the pack case may have a venting portion formed therein, and when the upper frame is deformed, a gas generated from the battery cell may move to the venting portion.

Meanwhile, according to another aspect of the present disclosure, there may be provided a vehicle including at least one battery pack described above.

### Advantageous Effects

The embodiments of the present disclosure have the effect of heat concentration by evenly dispersing heat caused by a flame inside the battery pack when a flame is generated from a single battery cell, thereby achieving uniform thermal distribution.

In addition, it has the effect of facilitating venting and allowing gas to be discharged easily.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a conventional battery pack.
FIG. 2 is an exploded perspective view showing a battery pack according to an embodiment of the present disclosure.
FIG. 3 is a cross-sectional view showing the battery pack according to an embodiment of the present disclosure, in which a bolt is separated from a barrier frame.
FIG. 4 is a drawing showing that the bolt is coupled to the barrier frame in FIG. 3.
FIG. 5 is a drawing showing that an upper frame and the bolt are separated from a barrier frame as a melting portion melts in FIG. 4.
FIG. 6 is a perspective view showing a bolt in the battery pack according to an embodiment of the present disclosure, in which the melting portion is separated from the body portion.
FIG. 7 is a perspective view showing a bolt in the battery pack according to an embodiment of the present disclosure, in which the melting portion is coupled to the body portion.
FIG. 8 is a perspective view showing a bottom surface of FIG. 7.
FIG. 9 is a modified embodiment of FIG. 8.
FIG. 10 is another modified embodiment of FIG. 8.
FIG. 11 is a cross-sectional view showing the battery pack according to an embodiment of the present disclosure, in which the melting portion of the bolt melts to deform the upper frame so that a buffer space is formed.
FIG. 12 is a partial perspective view showing a battery pack according to a modified embodiment of the present disclosure.
FIG. 13 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

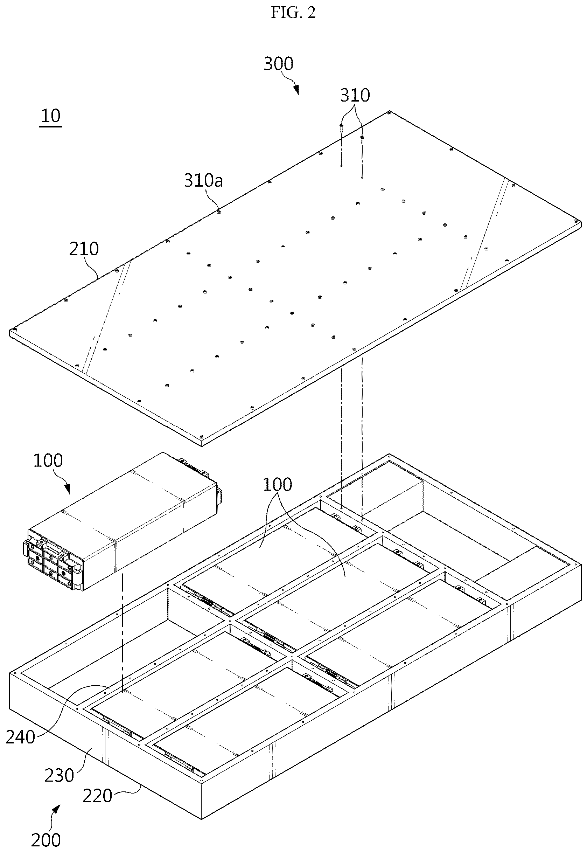

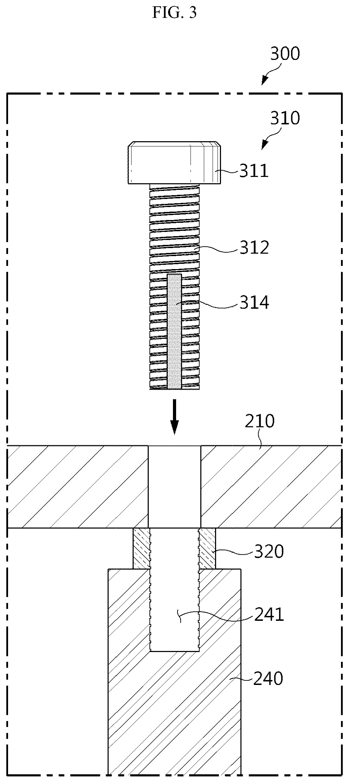

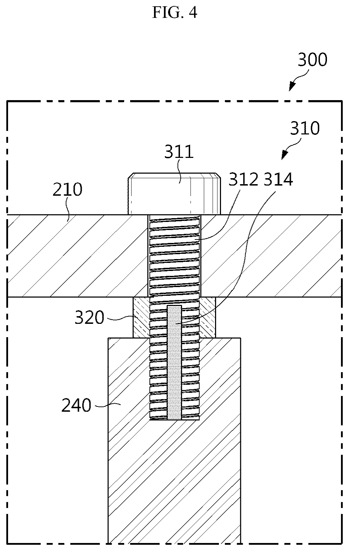

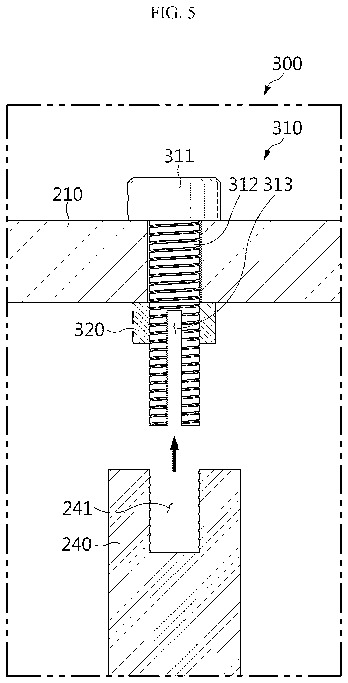

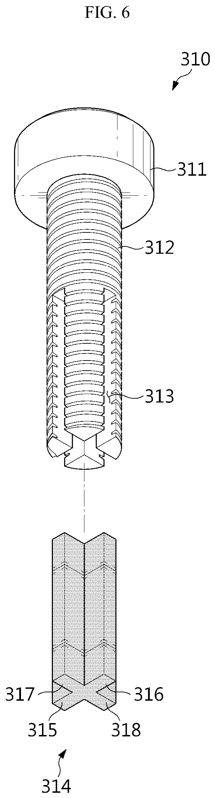

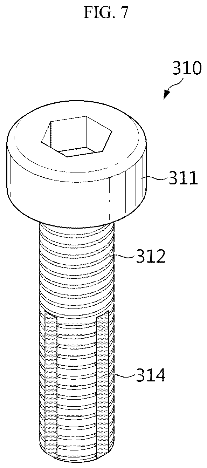

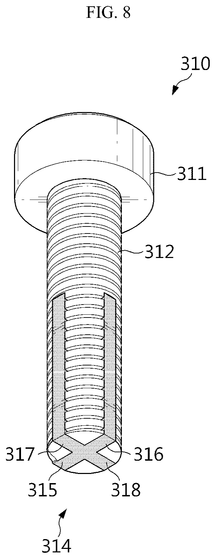

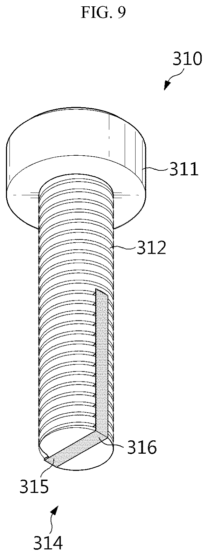

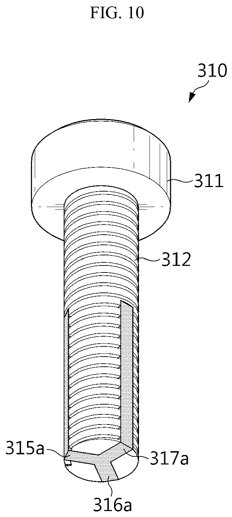

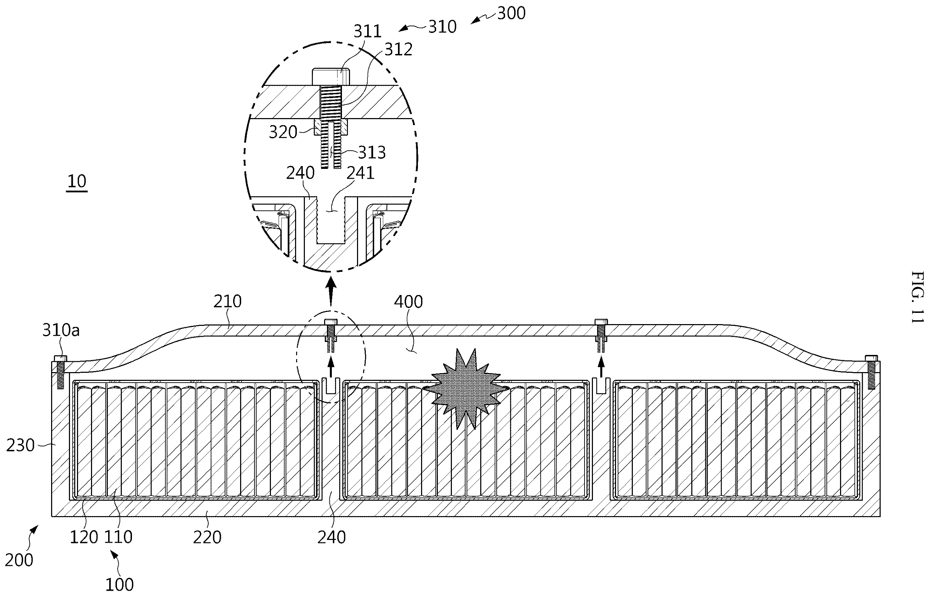

FIG. 2 is an exploded perspective view showing a battery pack according to an embodiment of the present disclosure, FIG. 3 is a cross-sectional view showing the battery pack according to an embodiment of the present disclosure, in which a bolt is separated from a barrier frame, FIG. 4 is a drawing showing that the bolt is coupled to the barrier frame in FIG. 3, FIG. 5 is a drawing showing that an upper frame and the bolt are separated from a barrier frame as a melting portion melts in FIG. 4, FIG. 6 is a perspective view showing a bolt in the battery pack according to an embodiment of the present disclosure, in which the melting portion is separated from the body portion, FIG. 7 is a perspective view showing a bolt in the battery pack according to an embodiment of the present disclosure, in which the melting portion is coupled to the body portion, FIG. 8 is a perspective view showing a bottom surface of FIG. 7, FIG. 9 is a modified embodiment of FIG. 8, FIG. 10 is another modified embodiment of FIG. 8, and FIG. 11 is a cross-sectional view showing the battery pack according to an embodiment of the present disclosure, in which the melting portion of the bolt melts to deform the upper frame so that a buffer space is formed.

Referring to FIG. 2, the battery pack 10 according to an embodiment of the present disclosure may include a plurality of battery modules 100, a pack case 200, and a fastening member 300.

The battery module 100 is accommodated in the pack case 200. In addition, a plurality of battery cells 110 (see FIG. 11) are stacked in each of the battery modules 100, and a plurality of battery modules 100 may be provided and arranged in various ways. For example, the battery modules 100 may be arranged in a horizontal direction and a vertical direction, but are not limited thereto.

The battery module 100 may have a plurality of battery cells 110 and a module case 120 (see FIG. 11).

The plurality of battery cells 110 may be stacked. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 110, or the positive electrode lead and the negative electrode lead may be arranged in the same direction with respect to the longitudinal direction of the battery cell 110.

The battery cell 110 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The plurality of battery cells 110 are stacked and accommodated in the module case 120. The module case 120 surrounds the plurality of battery cells 110, thereby protecting the battery cells 110 from external vibrations or shocks.

The module case 120 may be formed in a shape corresponding to the shape of the stack in which a plurality of battery cells 110 are stacked. For example, if the stack in which a plurality of battery cells 110 are stacked is formed in a hexahedral shape, the module case 120 may also be formed in a hexahedral shape corresponding thereto. However, the present disclosure is not limited thereto. Here, the module case 120 may include an upper module case 120, a lower module case 120, and a side module case 120.

In addition, the module case 120 may be formed by, for example, bending a metal plate, whereby the module case 120 may be manufactured in an integral form. If the module case 120 is manufactured in an integral form, the coupling process may become easy and simple. Alternatively, the module case 120 may be provided in a separate form and coupled by welding, etc. However, the material of the module case 120 is not limited to a metal material.

A plurality of battery modules 100 are accommodated in the pack case 200. The pack case 200 may include, for example, an upper frame 210, a lower frame 220, a side frame 230, and a barrier frame 240.

Referring to FIGS. 2 and 11, the upper frame 210 is coupled to the side frame 230 and the barrier frame 240. Here, the upper frame 210 is fixed to the side frame 230 by a common bolt 310a, but the barrier frame 240 is fastened by a fastening member 300, which is configured to melt or burn at least partially when the temperature rises, for example a bolt 310 according to an embodiment of the present disclosure.

That is, when a thermal event occurs in the battery cell 110, etc., the upper frame 210 is fixed to the side frame 230 by the common bolt 310a, but the fastening member 300 fastening the barrier frame 240 melts or burns, so that the upper frame 210 is separated from the barrier frame 240 in the thermal event situation (see FIG. 11), and thereby a buffer space 400 may be formed between the upper frame 210 and the barrier frame 240. This will be described in detail later.

The lower frame 220 is configured such that the plurality of battery modules 100 are placed thereon. The lower frame 220 may be formed in a rectangular plate shape, but is not limited thereto. The lower frame 220 forms the bottom of the pack case 200.

The side frame 230 may be configured to extend upward from an edge of the lower frame 220. The side frame 230 defines the height of the pack case 200 and forms a preset space between the side frame 230 and the lower frame 220.

In addition, the plurality of battery modules 100 are placed in the space between the side frame 230 and the lower frame 220. The side frame 230 may include a long side frame 230 with a relatively long length and a short side frame 230 with a relatively short length. Alternatively, the lengths of the side frames 230 may all be the same.

The barrier frame 240 extends upward within the lower frame 220 and is coupled to the side frame 230. One or more barrier frames 240 may be provided, and the battery module 100 may be arranged between the plurality of barrier frames 240 or between the barrier frame 240 and the side frame 230. Here, the barrier frame 240 may be arranged in a horizontal or vertical direction within the side frame 230.

Also, referring to FIG. 3, a coupling hole 241 for fastening may be formed in the barrier frame 240 so that the upper frame 210 may be fastened by the fastening member 300.

The fastening member 300 is configured to fasten the upper frame 210 of the pack case 200. Here, at least a portion of the fastening member 300 is directly fastened to the pack case 200. That is, a thread is formed on the inner side of the barrier frame 240 of the pack case 200, and the fastening member 300, for example the bolt 310, is directly screwed to the inner side of the barrier frame 240 without a nut.

In addition, the fastening member 300 is configured to melt or burn at least partially when the temperature rises. That is, in the battery pack 10 according to an embodiment of the present disclosure, the fastening member 300 is configured to melt or burn when the temperature rises due to a flame or the like. Also, as described above, the fastening member 300 configured to melt or burn due to a temperature rise fastens the upper frame 210 and the barrier frame 240.

The fastening member 300 may include the bolt 310, but is not limited to. However, for convenience of explanation, the following description focuses on the case where the fastening member 300 is the bolt 310 and a nut 320, explained later.

Referring to FIGS. 3, 4 and 6, the bolt 310 may include a head portion 311, a body portion 312, and a melting portion 314. The bolt 310 according to an embodiment of the present disclosure may have the desired effect in the present disclosure by changing the structure of a conventional bolt.

The head portion 311 is coupled to the body portion 312 and contacts the upper frame 210. The head portion 311 has a function common to a general bolt head.

In addition, the body portion 312 is coupled to the head portion 311. Referring to FIGS. 5 and 6, an insert groove 313 is formed in the body portion 312, and a melting portion 314 is coupled to the insert groove 313. Also, a thread is formed on the body portion 312 and is screwed to the barrier frame 240 of the pack case 200.

The insert groove 313 formed in the body portion 312 may be formed in the body portion 312 at a side opposite to the head portion 311. Here, insert grooves 313 of various shapes may be formed in the body portion 312, and the shape of the insert groove 313 corresponds to the shape of the melting portion 314.

Referring to FIGS. 7 and 8, the melting portion 314 is inserted into the insert groove 313 of the body portion 312 to support the body portion 312. In addition, the melting portion 314 is made of a meltable or burning material, and when a thermal event occurs in the battery cell 110 or the like, the melting portion 314 melts or burns. In addition, as shown in FIG. 5, when the melting portion 314 that supports the body portion 312 of the bolt 310 melts, the fastening force of the bolt 310 weakens so that the upper frame 210 together with the bolt 310 is separated from the barrier frame 240.

Referring to FIGS. 6 and 8, the melting portion 314 may include a first portion 315, a second portion 316, a third portion 317, and a fourth portion 318. The first portion 315 is in close contact with one side of the insert groove 313. Further, the second portion 316 extends symmetrically with respect to the first portion 315 and is in close contact with the other side of the insert groove 313. Further, the third portion 317 may extend from the center of the first portion 315 and the second portion 316 in a direction different from the first portion 315 and the second portion 316, for example in a vertical direction, and may be in close contact with the insert groove 313. Further, the fourth portion 318 may extend symmetrically with respect to the third portion 317 and is in close contact with the insert groove 313. Accordingly, the melting portion 314 may be formed to have a cross-section formed in a cross shape as a whole, but the shape of the melting portion 314 is not limited thereto.

Referring to FIG. 9 as a modified embodiment, the melting portion 314 may be formed in a straight shape including only the first portion 315 and the second portion 316.

Alternatively, referring to FIG. 10 as another modified embodiment, the melting portion 314 may include a first portion 315a, a second portion 316a, and a third portion 317a. The first portion 315a is in close contact with the insert groove 313. Further, the second portion 316a extends from the first portion 315a at a preset angle and is in close contact with the insert groove 313. Further, the third portion 317a is spaced apart from the second portion 316a, extends from the first portion 315a at a preset angle, and is in close contact with the insert groove 313. Accordingly, the melting portion 314 may be formed in an approximately triangular shape. However, the shape of the melting portion 314 is not limited thereto and may be more diverse.

The melting portion 314 may be made of various materials so as to melt or burn at least partially when the temperature rises, and for example, the melting portion 314 may be made of various plastic materials that can melt at a preset temperature, but is not limited thereto.

As described above, the peck case may include an upper frame 210 and a barrier frame 240, and the upper frame 210 and the barrier frame 240 may be fastened by, for example, the bolt 310. Here, a thread may be formed on the inner side of the barrier frame 240, and the bolt 310 is coupled to the thread of the barrier frame 240.

Also, referring to FIG. 4, when the bolt 310 is coupled to the barrier frame 240, the melting portion 314 inserted into the insert groove 313 of the body portion 312 of the bolt 310 is located inside the barrier frame 240. Here, the entire melting portion 314 may be located inside the barrier frame 240, but it is also possible that a part of the melting portion 314 is located inside the barrier frame 240.

Referring to FIG. 4, the fastening member 300 includes a nut 320, and the nut 320 is coupled to the upper frame 210. The nut 320 may be coupled to the upper frame 210 in various ways, for example by welding, but is not limited thereto.

In FIG. 4, the nut 320 is not coupled only in contact with the barrier frame 240, but is separated from the barrier frame 240. In FIG. 4, the nut 320 and the barrier frame 240 are in contact, but the nut 320 and the barrier frame 240 may also be spaced apart by a preset interval.

Referring to FIG. 4, the bolt 310 is coupled to the nut 320 coupled to the upper frame 210 to firstly fasten the upper frame 210 and the barrier frame 240, and further, the bolt 310 is coupled to the barrier frame 240 to secondly fasten the upper frame 210 and the barrier frame 240.

Referring to FIG. 11, when a flame is generated in the battery cell 110 so that the melting portion 314 melts, the bolt 310 is separated from the barrier frame 240 to deform the upper frame 210 upward, and accordingly, a buffer space 400 is formed between the upper frame 210 and the battery module 100.

That is, the upper frame 210 is deformed upward by the flame and gas generated from the battery cell 110 to form a buffer space 400, and as the heat from the flame is diffused to another battery module 100 through the buffer space 400, an overall uniform thermal distribution is achieved, and heat may be prevented from being concentrated in any one battery module 100.

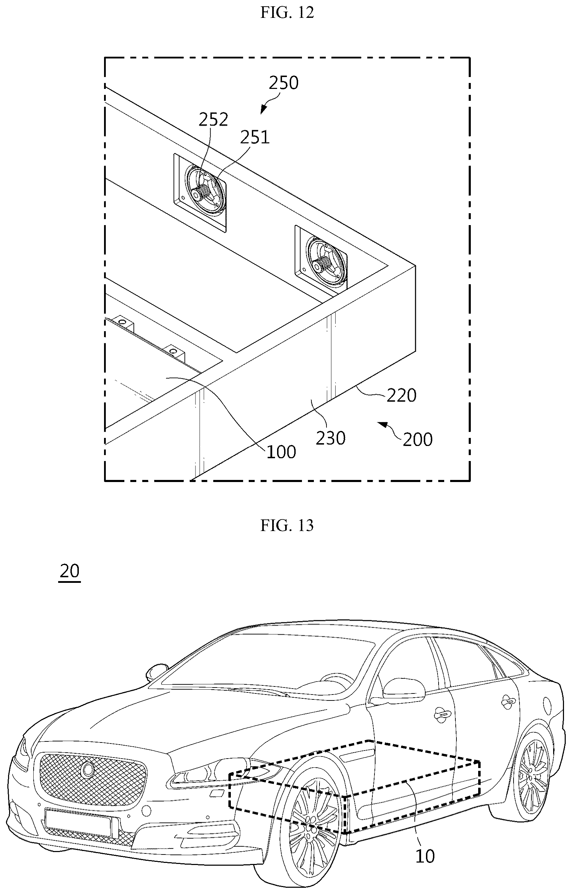

FIG. 12 is a partial perspective view showing a battery pack 10 according to a modified embodiment of the present disclosure.

Referring to FIG. 12, the modified embodiment is different from the former embodiment in that a venting portion 250 is formed in the pack case 200. However, the features of the modified embodiments, which are common to the former embodiment, will not be described again in detail. In addition, the features of the modified embodiments, which are applicable to the former embodiment, can be applied to the former embodiment.

Referring to FIG. 12, a venting portion 250 is formed in the pack case 200. As described above, if the temperature increases so that the melting portion 314 melts to deform the upper frame 210, gas generated from the battery cell 110 may move to the venting portion 250 and be discharged.

Referring to FIG. 12, the venting portion 250 may include a venting hole 251 and a venting valve 252. The venting hole 251 is a hole through which gas generated from the battery cell 110 is discharged, and may be formed in the pack case 200, for example, the side frame 230, but is not limited thereto.

In addition, the venting valve 252 may be installed in the venting hole 251. The venting valve 252 may be configured in various ways. For example, the venting valve 252 may be configured to close the venting hole 251 and open when the internal pressure of the pack case 200 exceeds a preset value.

That is, the venting valve 252 normally blocks the venting hole 251, but when gas leaks from the battery cell 110 and the internal pressure of the pack case 200 exceeds a preset value or range, the venting valve 252 opens and the gas is discharged from the pack case 200 through the venting hole 251.

As described above, if the upper frame 210 is deformed upward by the flame and gas generated from the battery cell 110 to form the buffer space 400, the gas moves along the buffer space 400 to the venting portion 250, and as the venting valve 252 is opened by the pressure of the gas, the gas may be discharged to the outside of the pack case 200.

That is, venting is facilitated by the buffer space 400 formed by the deformation of the upper frame 210, thereby allowing gas to be discharged easily.

In addition, as described above, as the heat spreads to other battery modules 100 through the buffer space 400, heat is prevented from being concentrated on any one battery module 100, thereby achieving a uniform thermal distribution.

Also, since the gas discharge is facilitated by the buffer space 400 formed between the upper frame 210 and the battery module 100, ultimately, the thermal runaway phenomenon may be prevented by preventing the flame chain reaction due to flame propagation.

FIG. 13 is a drawing for illustrating a vehicle including the battery pack 10 according to each embodiment of the present disclosure.

Referring to FIG. 13, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked;
a pack case in which the plurality of battery modules are accommodated; and
a fastening member configured to fasten the pack case,
wherein at least a portion of the fastening member is directly fastened to the pack case and at least a portion thereof melts or burns when temperature rises.

2. The battery pack according to claim 1,
wherein the fastening member includes a bolt, and
wherein the bolt includes:
a head portion;
a body portion coupled to the head portion, having an insert groove formed therein, and screwed to the pack case; and
a melting portion made of a meltable or burning material and inserted into the insert groove of the body portion.

3. The battery pack according to claim 2,
wherein the insert groove is formed in the body portion at a side opposite to the head portion.

4. The battery pack according to claim 3,
wherein the melting portion includes:
a first portion in close contact with one side of the insert groove; and
a second portion extending symmetrically with the first portion and in close contact with the other side of the insert groove.

5. The battery pack according to claim 4,
wherein the melting portion further includes:
a third portion extending from a center of the first portion and the second portion in a direction different from the first portion and the second portion to come into close contact with the insert groove; and
a fourth portion extending symmetrically with the third portion to come into close contact with the insert groove.

6. The battery pack according to claim 5,
wherein the melting portion has a cross-section formed in a cross shape.

7. The battery pack according to claim 3,
wherein the melting portion includes:
a first portion in close contact with the insert groove;
a second portion extending from the first portion at a preset angle to come into contact with the insert groove; and
a third portion spaced apart from the second portion and extending from the first portion at a preset angle to come into close contact with the insert groove.

8. The battery pack according to claim 2,
wherein the melting portion is made of plastic.

9. The battery pack according to claim 2,
wherein the pack case includes:
an upper frame; and
a barrier frame fastened to the upper frame by the fastening member,
wherein the melting portion is located inside the barrier frame.

10. The battery pack according to claim 9,
wherein the barrier frame has a thread formed thereon,
wherein the fastening member includes a nut coupled to the upper frame, and
wherein the bolt is fastened to the nut and the barrier frame.

11. The battery pack according to claim 10,
wherein the nut is coupled to the upper frame by welding.

12. The battery pack according to claim 10,
wherein the nut is separated from the barrier frame.

13. The battery pack according to claim 12,
wherein when a flame occurs in the battery cell and the melting portion melts, the bolt is separated from the barrier frame to deform the upper frame upward, and a buffer space is formed between the upper frame and the battery module.

14. The battery pack according to claim 9,
wherein the pack case has a venting portion formed therein, and
wherein when the upper frame is deformed, a gas generated from the battery cell moves to the venting portion.

15. A vehicle comprising the battery pack according to any one of claims 1 to 14.
